# EUROPEAN PATENT APPLICATION

(11) **EP 4 624 262 A1**
(43) Date of publication of application: **01.10.2025**
(21) Application number: 25163181.8
(22) Date of filing: 12.03.2025
(51) Int. Cl.: B60R 11/04

(54) **METHOD OF, ARRANGEMENT FOR AND DATA PROCESSING PROGRAM PRODUCT FOR EXTENDING THE FIELD OF VIEW OF A CAMERA-BASED EXTERIOR VIEW ASSEMBLY FOR ROAD VEHICLES**

(30) Priority: 18.03.2024 DE 102024107630
(71) Applicant: Motherson Innovations Company Ltd., London EC2N 2AX (GB)
(72) Inventor: WIECZOREK, Romeo, 73232 Esslingen am Neckar (DE); KOLLER, Matthias, 70186 Stuttgart (DE)
(74) Representative: Isarpatent

(57) **Abstract**

The present invention relates to a method of, an arrangement for and a data processing program product for a camera-based exterior view assembly for road vehicles, in particular for a camera-based exterior rear view assembly. An image capturing system comprising an optical lens arrangement and an image capturing sensor arrangement and having a first field of view is adapted to capture optical radiation along a first optical path from a first part of the surrounding area of the road vehicle and a light deflection device is arranged such that said light deflection device is arranged within the first field of view (6) of the image capturing system and such that said light deflection device is capturing optical radiation from a second part of the surrounding area of the road vehicle within a second field of view different from the first field of view.

## Description

### FIELD OF THE INVENTION

The present invention relates to a method of, an arrangement for and a data processing program product for a camera-based exterior view assembly in particular for road vehicles, in particular for a camera-based exterior rear view assembly.

### PRIOR ART

EP application EP 2 774 815 A1 describes a system which has a detection unit seizing optically expressed vehicle environments. A reproducing unit is arranged within a vehicle interior, and displays the detected vehicle environments. The detection unit comprises a light deflection device - i.e. a mirror - for partially optically detecting an outer vehicle environment and a receiver unit i.e. camera, that is arranged at distance from the light deflection device. The receiver unit receives an image of the light deflection device and the reproducing unit reproduces the image of the light deflection device. The camera is aligned in such a way with respect to the mirror that the field of view reflected by the mirror is recorded as an image by means of the receiver unit, i.e. the field of view reflected by the mirror is what the camera and receiver unit sees and produces as image. For this purpose, it is ensured that an optical path exists between the light deflection device, i.e. the mirror and the receiver unit, which allows the image of the mirror to be recorded by the receiver unit.

US patent US 6,636,258 B2 describes a 360° vision system for a vehicle. According to this document, a vehicle monitoring system including a camera and a conical reflector mounted on top of a vehicle. The camera and the conical reflector provide a 360° field of view image around the vehicle. So again, the field of view reflected by the mirror is what the camera sees and produces as image. For this purpose, an optical path exists between the mirror and the camera.

US patent US 11,173,839 B2 describes a camera module for use in a vehicle which includes a camera for capturing a surrounding of the vehicle, and which is configured to move from a retracted position to a deployed position, a camera lens forming a housing or part of the housing around the camera, a camera holder which carries the camera and the surrounding camera lens, and a drive system including a motor for moving the camera from the retracted position to the deployed position or from the deployed position to the retracted position. A specially designed mirror, such as a hemispherical or semi- hemispherical and semi-transparent mirror dome is arranged in the field of view of the camera. Also in this case, the field of view reflected by the mirror dome is what the camera sees and produces as image. For this purpose, an optical path exists between the mirror dome and the camera.

### BACKGROUND OF THE INVENTION

Vehicles, in particular road vehicles, are required to have exterior view assemblies, in particular exterior rear view assemblies, which allow the driver to observe the surroundings of the vehicle, which are outside of the driver's peripheral vision. In order to enable the driver to observe the surroundings, the exterior view assemblies are mounted to the exterior of road vehicles. The surroundings of the vehicle include the rear of the vehicle as well as the left and right side of the vehicle. Furthermore, some exterior view assemblies are configured to effectively cover the blind spot(s) of the driver.

Camera-based exterior rear view assemblies as specific type of exterior view assemblies employ a camera system. Furthermore, camera-based exterior view assemblies, especially systems for housing a camera system or a plurality of camera systems inside such camera-based exterior view assembly, are configured to be attached to a vehicle body and carry a multitude of connectors, sensors and/or actuators in order to ensure a proper functionality.

Earlier DE patent DE 10 2021 203 267 B3 of the same patent applicant as is the applicant of this present application describes an exterior rear view assembly, comprising: a base frame comprising a bodywork side surface configured to be attached to a vehicle body. Furthermore, the document describes a seal for such an exterior rear view assembly. The exterior rear view assembly is configured to carry a rear view camera and the base frame is formed as a camera mounting arm. A cable harness may be configured for example as a power supply to the camera and a video signal line from the camera to a vehicle infrastructure.

The individual features of this earlier patent application, filed by the patent applicant of this patent application, are hereby incorporated by reference into the specification of this invention, where and in so-far those of ordinary skill in the art may find it useful that such individual features of this earlier patent application are combined with the features of the invention disclosed herein and/or used to practice the invention disclosed herein.

An exterior view assembly, in particular an exterior rear view assembly for a road vehicle provides an image of the rear part of the road vehicle, which at least meets the legal requirements and belongs to a subgroup of devices for indirect vision. These provide images and views of objects, which are not in the direct field of vision of a driver, i.e. in directions opposite, left, right, below and/or above the driver's line of vision. The driver's view may not be fully satisfactory, in particular in the direction of vision. For example, there may be obstructions to vision caused by parts of the driver's own vehicle, such as parts of the carriage, in particular the A-pillar, the roof structure and/or the bonnet, and obstructions to vision caused by other vehicles and/or objects outside the vehicle which may obstruct vision in such a way that the driver cannot fully satisfactorily grasp a driving situation or can only grasp it incompletely. In addition, the driver may not be able to perceive the situation presented to him in or away from the line of vision in the way that would be necessary to control the vehicle according to the situation. Therefore, an exterior view assembly may also be designed to process the information according to the driver's abilities in order to give him the best possible understanding of the situation.

Various functions and devices may be incorporated in and/or controlled by exterior view assemblies, including in particular cameras. Particularly useful are functions and devices for improving, extending and/or maintaining the functionality of the exterior view assemblies under normal or extreme conditions. This can include heating and/or cooling arrangements, cleaning arrangements such as wipers, actuators for moving the exterior view assemblies or parts thereof, such as a display, a camera system and/or parts of a camera system comprising for example lenses, filters, light sources, adaptive optics such as deformable mirrors, sensors and/or mirrors, and/or actuators for inducing movements of other objects, for example parts of the vehicle and/or objects surrounding the vehicle.

The camera may include, for example, one or several CCD or CMOS sensors. The housing of a camera module may be made of plastic, metal, glass, another suitable material and/or any combination thereof and may be used in combination with the techniques described below to change or modify the properties of the material or the material surface. Various types of fastening arrangements can be used to attach the camera module to the vehicle or other components, such as positively form-fit connecting arrangements and/or non-positively force-fit connecting arrangements.

A person skilled in the art can find more details and references on how to implement one or several of afore mentioned technical features e.g. in previous patent application document US 11,014,490 B2 filed by the same patent applicant being applicant of this patent application, hereby incorporated by reference into the disclosure of this patent application. The individual features of this earlier patent application, filed by the patent applicant of this patent application, are hereby incorporated by reference into the specification of this invention, where and in so-far those of ordinary skill in the art may find it useful that such individual features of this earlier patent application are combined with the features of the invention disclosed herein and/or used to practice the invention disclosed herein.

Heavy goods vehicles such as trucks as a special type of road vehicles have specific compulsory indirect field of view mirror class areas, as defined in UN ECE Regulation No 46 (R46): Regulation No 46 of the Economic Commission for Europe of the United Nations (UNECE) - Uniform provisions concerning the approval of devices for indirect vision and of motor vehicles with regard to the installation of these devices (OJ L 237 08.08.2014, p. 24)
ELI: http://data.europa.eu/eli/reg/2014/46/oj

This regulation defines the following class areas in the surrounding of (heavy goods) road vehicle, and the content of this regulation, in particular the definitions of class areas in the surrounding of road vehicle is hereby fully incorporated by reference into the disclosure of this present patent application:
Class II (main side-view), Class IV (wide-angle side-view), Class V (close-proximity - blind spot area directly beside and below the passenger door) and Class VI (front - blind spot immediately in front of the vehicle), as well as optional mirrors for Class I (interior) and Class V (close-proximity on the driver's side). As these different view areas around a road vehicle are not or hardly overlapping, prior art exterior view assembly for road vehicles, especially for heavy goods vehicles such as trucks, typically require a separate camera-based exterior view assembly for each of these view areas. Alternatively, camera-based surround view assemblies are provided in the prior art, which allow up to 360° view coverage of the surrounding area of a vehicle, however the resulting camera image is highly distorted due to "fisheye effects", which results in high and time consuming image post-processing data load, that may either result in real-time images or video stream displays still comprising distortions, or result in delays in displaying corrected images or video stream displays that may - in worst case - cause security risks for a vehicle driver.

### SUMMARY OF THE INVENTION

In view of the above, an object of the present invention is to provide a new and improved method of, an arrangement for and a data processing program product for a camera-based exterior view assembly for road vehicles, in particular for a camera-based exterior rear view assembly, in particular for extending the field of view of such camera-based exterior view assembly.

In accordance with the present invention, the following is provided:
A camera-based exterior view assembly for road vehicles, in particular a camera-based exterior rear view assembly, mounted to a road vehicle, as recited in claim 1 or in claim 2;
a road vehicle comprising an afore mentioned camera-based exterior view assembly as recited in claim 7;
a method for operating a camera-based exterior view assembly for road vehicles, in particular for operating a camera-based exterior rear view assembly mounted to a road vehicle, as recited in claim 8
a method for operating a camera-based exterior view assembly for road vehicles, in particular for operating a camera-based exterior rear view assembly mounted to a road vehicle, as recited in claim 9;
a data structure for use in camera-based exterior view assembly for road vehicles, in particular for use in a camera-based exterior rear view assembly mounted to a road vehicle as recited in claim 13;
a data processing program product, adapted for implementing a method for operating a camera-based exterior view assembly for road vehicles, in particular a method for operating a camera-based exterior rear view assembly mounted to a road vehicle as recited in claim 15.

Advantageous or preferred features of the invention are recited in the dependent claims.

According to a first aspect, the present invention provides a camera-based exterior view assembly for road vehicles, in particular a camera-based exterior rear view assembly, mounted to a road vehicle, comprising
- an image capturing system or a plurality of image capturing systems, comprising an optical lens arrangement or a plurality of optical lens arrangements and an image capturing sensor arrangement or a plurality of image capturing sensor arrangements, and having a first field of view or a plurality of first fields of view,
   - said image capturing system or plurality of image capturing systems being adapted to capture optical radiation from a first part of the surrounding area of the road vehicle within said first field of view or within said plurality of first fields of view;
- a light deflection device, mounted to the camera-based exterior view assembly and/or to the road vehicle, and configured such that
   - said light deflection device is arranged within the first field of view of the image capturing system or within the plurality of first fields of view of the image capturing systems, and such that
   - said light deflection device is capturing optical radiation from a second part of the surrounding area of the road vehicle within a second field of view different from the first field of view or different from the plurality of first fields of view, and such that
   - said captured optical radiation from the second part of the surrounding area of the road vehicle is deflected onto a part of said image capturing sensor arrangement via said optical lens arrangement or onto a part of said plurality of image capturing sensor arrangements via said plurality of optical lens arrangements.

The afore mentioned camera-based exterior view assembly according to the first aspect can be configured to work with or in other aspects or embodiments of the invention as described in this document, and can include any individual feature or any combination of features of other aspects or embodiments of the invention as described in this document, including the use of a method, of a data structure and/or of a data processing program product according to any of the aspects or embodiments as described in this document. Such assembly can be configured to perform a method according to any embodiment as described before, as well as to incorporate any of the technical features of any other embodiment of the invention as described in this document, and/or to execute an embodiment in the form of a data processing program product as described in this document.

According to a further aspect, the present invention provides a camera-based exterior view assembly for road vehicles, in particular a camera-based exterior rear view assembly, mounted to a road vehicle, comprising
- an image capturing system or a plurality of image capturing systems, comprising an optical lens arrangement or a plurality of optical lens arrangements and an image capturing sensor arrangement or a plurality of image capturing sensor arrangements, and having a first field of view or a plurality of first fields of view,
   - said image capturing system or plurality of image capturing systems being adapted to capture optical radiation along a first optical path or along a plurality of first optical paths from a first part of the surrounding area of the road vehicle within said first field of view or within said plurality of first fields of view);
- a light deflection device, mounted to the camera-based exterior view assembly and/or to the road vehicle, and configured such that
   - said light deflection device is arranged within the first field of view of the image capturing system or within the plurality of first fields of view of the image capturing systems, thereby partly shading the first field of view of the image capturing system or the plurality of first fields of view of the image capturing systems, and such that
   - said light deflection device is capturing optical radiation from a second part of the surrounding area of the road vehicle within a second field of view different from the first field of view or different from the plurality of first fields of view and along a second optical path different from the first optical path or from the plurality of first optical paths, and such that
- said captured optical radiation from the second part of the surrounding area of the road vehicle is deflected onto a part of said image capturing sensor arrangement via said optical lens arrangement or onto a part of said plurality of image capturing sensor arrangements via said plurality of optical lens arrangements.

The afore mentioned camera-based exterior view assembly according to the further aspect can be configured to work with or in other aspects or embodiments of the invention as described in this document, and can include any individual feature or any combination of features of other aspects or embodiments of the invention as described in this document, including the use of a method, of a data structure and/or of a data processing program product according to any of the aspects or embodiments as described in this document. Such assembly can be configured to perform a method according to any embodiment as described before, as well as to incorporate any of the technical features of any other embodiment of the invention as described in this document, and/or to execute an embodiment in the form of a data processing program product as described in this document.

According to an aspect of the invention, in the aspect or assembly as described before, as well as in the other embodiments of the invention as described in this document, the invention provides a camera-based exterior view assembly for road vehicles wherein
- said first field of view or said plurality of first fields of view of said image capturing system or said plurality of image capturing systems are adapted to collect optical radiation from a first class area or from a first plurality of class areas of the surrounding area of the road vehicle as defined in the afore mentioned UN ECE Regulation No 46; and
- said second field of view of said light deflection device is adapted to collect optical radiation from a second different class area or from a second plurality of different class areas of the surrounding area of the road vehicle as defined in the afore mentioned UN ECE Regulation No 46.

According to an aspect of the invention, in any of the aspects or arrangements as described before, as well as in the other embodiments of the invention as described in this document, the invention provides a camera-based exterior view assembly for road vehicles wherein said light deflection device has a first curved shape in a first cross-sectional plane and a second curved shape in a second cross-sectional plane perpendicular to the first cross-sectional plane.

According to an aspect of the invention, in any of the aspects or arrangements as described before, as well as in the other embodiments of the invention as described in this document, the invention provides a camera-based exterior view assembly for road vehicles wherein the light deflection device is movably mounted to the camera-based exterior rear view assembly and/or to the road vehicle, in particular to adapt said second field of view of said light deflection device and/or said second optical path of said light deflection device.

According to an aspect of the invention, in any of the aspects or arrangements as described before, the at least one image capturing system is a Camera Monitoring System, in particular a rear view Camera Monitoring System.

According to a further aspect, the present invention provides a road vehicle comprising a first camera-based exterior view assembly according to any of the aspects or arrangements as described before and/or implementing a method or a data processing program product according to any of the aspects as described in this document or implementing individual features or a combination of features of a method or of a data processing program product according to any of the aspects as described in this document, in particular a road vehicle further comprising a further camera-based exterior view assembly, in particular a camera-based exterior front view assembly, comprising a further image capturing system which is
- adapted to collect optical radiation from a front area of the surrounding area of the road vehicle, in particular from a front class area of the surrounding area of the road vehicle as defined in the afore mentioned UN ECE Regulation No 46,
- which is arranged in a center area of the front region of the vehicle, and
- which is configured as part of a Move-Off Information System (MOIS) of the road vehicle.

According to a further aspect, the present invention provides a method for operating a camera-based exterior view assembly for road vehicles, in particular a camera-based exterior rear view assemblymounted to a road vehicle, in particular for use in a camera-based exterior view assembly for road vehicles and/or in a road vehicle according to any of the afore mentioned aspects of the invention, the method comprising the steps of:
- capturing optical radiation along a first optical path from a first part of the surrounding area of the road vehicle within a first field of view), using an image capturing system, comprising an optical lens arrangement and an image capturing sensor arrangement providing said first field of view;
- using and/or orienting a light deflection device configured such that
   - said light deflection device is capturing optical radiation from a second part of the surrounding area of the road vehicle different from the first area within a second field of view different from the first field of view and along a second optical path different from the first optical path; and such that
   - said captured optical radiation from a second part of the surrounding area of the road vehicle is deflected onto a part of said image capturing sensor arrangement via said optical lens arrangement.

The afore mentioned method according to this further aspect can be configured to work with or in other aspects or embodiments of the invention as described in this document, including the use in an arrangement according to any of the aspects or embodiments as described in this document and including the use of the method in the form of a data processing program product according to any of the aspects or embodiments as described in this document.

According to a further aspect, the present invention provides a method for operating a camera-based exterior view assembly for road vehicles, in particular for operating a camera-based exterior rear view assembly mounted to a road vehicle, in particular a method according to the afore mentioned aspect of the invention or according to individual features, several features or any combination of features of the afore mentioned aspect of the invention, in particular for use in a camera-based exterior view assembly for road vehicles and/or in a road vehicle according to any of the afore mentioned aspects of the invention, or according to any individual features, several features or any combination of features of the afore mentioned assembly related aspects of the invention, the method comprising the steps of:
- receiving first optical radiation from a first area of the surrounding area of the road vehicle within a first field of view via a first optical path defined by an optical lens system and an image capturing sensor arrangement of an image capturing system;
- receiving second optical radiation from a second area of the surrounding area of the road vehicle different from the first area, within a second field of view different from the first field of view via a second optical path different from the first optical path and defined by a light deflection means, said optical lens system and said image capturing sensor arrangement of said image capturing system;

- creating combined image data by means of said image capturing sensor arrangement of said image capturing system, said combined image data comprising a first image data section representing the received first optical radiation from said first area of the surrounding area of the road vehicle and a second image data section representing the received second optical radiation from said second area of the surrounding area of the road vehicle, and
- displaying the combined image data (to a vehicle user by means of an image display arrangement; or
- creating image data by means of said image capturing sensor arrangement of said image capturing system, said image data comprising first image data representing the received first optical radiation from said first area of the surrounding area of the road vehicle and a second image data representing the received second optical radiation from said second area of the surrounding area of the road vehicle and
- displaying said image data to a vehicle user by means of one image display arrangements or by means of a plurality of image display arrangements

The afore mentioned method according to this further aspect can be configured to work with or in other aspects or embodiments of the invention as described in this document, including the use in an arrangement according to any of the aspects or embodiments as described in this document and including the use of the method in the form of a data processing program product according to any of the aspects or embodiments as described in this document.

According to an aspect of the invention, in a method according to the afore mentioned aspects as described before, as well as for use in any other embodiment of the invention as described in this document, including in an embodiment in the form of a data processing program product, the first area of the surrounding area of the road vehicle comprises a first class area or a first plurality of class areas as defined in UN ECE Regulation No 46, and the second area of the surrounding area of the road vehicle comprises a second different class area or a second plurality of different class areas as defined in UN ECE Regulation No 46.

According to an aspect of the invention, in a method according to any the afore mentioned aspects as described before, as well as for use in any other embodiment of the invention as described in this document, including in an embodiment in the form of a data processing program product, such method comprises the steps of:
- receiving first optical radiation from a first area of the surrounding area of the road vehicle within a first field of view or a plurality of first fields of view of an image capturing system or of a plurality of image capturing systems adapted to collect optical radiation from a first class area or a first plurality of class areas of the surrounding area of the road vehicle as defined in UN ECE Regulation No 46; and
- receiving second optical radiation from a second area of the surrounding area of the road vehicle different from the first area within a second field of view of a light deflection device adapted to collect optical radiation from a second different class area or a second plurality of different class areas of the surrounding area of the road vehicle as defined in UN ECE Regulation No 46.

According to an aspect of the invention, in a method according to the afore mentioned aspects as described before, as well as for use in any other embodiment of the invention as described in this document, including in an embodiment in the form of a data processing program product, such method comprises the steps of:
- applying an image post processing and/or image correction algorithm to the combined image data before displaying the combined image data to a vehicle user by means of an image display arrangement to eliminate one of image distortion and/or differences in image quality and/or differences in image brightness and/or differences in image sharpness;
- in particular applying to the combined image data an image post processing and/or image correction algorithm based on calibration data and/or applying to the combined image data an artificial intelligence based and/or neuronal network based image post processing and/or image correction algorithm comprising a machine learning model in the form of a pre-trained neural network, in particular in the form of a pre-trained transversal neural network and/or in the form of a pre-trained convolutional neural network.

According to a further aspect, the present invention provides a data structure for use in a camera-based exterior view assembly for road vehicles, in particular for use in a camera-based exterior rear view assembly mounted to a road vehicle, and/or for use in a road vehicle, according to any of the aspects as described before, and/or a data structure generated by a camera-based exterior view assembly for road vehicles, in particular generated by a camera-based exterior rear view assembly mounted to a road vehicle and/or by a road vehicle, according to any the aspects as described before, and/or in particular generated by a method or in the course of a method according to any of the aspects as described before or by a method comprising any of or several of the features of any of the aspects as described before, such data structure comprising combined image data containing
- first image data representing optical radiation captured along a first optical path from a first part of the surrounding area of a road vehicle within a first field of view;
- second image data representing optical radiation captured along a second optical path different from the first optical path from a second part of the surrounding area of a road vehicle within a second field of view different from the first field of view;
and in particular containing
- boundary data adapted to create a displayable optical boundary separating the first image data from the second image data when said combined image data is displayed.

According to an aspect of the invention, in a data structure according to the afore mentioned aspect as described before, as well as for use in any other embodiment of the invention as described in this document, including in an embodiment in the form of a data processing program product, said first image data representing optical radiation captured along a first optical path from a first part of the surrounding area of a road vehicle within a first field of view represents optical information from a first class area or a first plurality of class areas of the surrounding area of the road vehicle as defined in UN ECE Regulation No 46, and said second image data representing optical radiation captured along a second optical path different from the first optical path from a second part of the surrounding area of a road vehicle within a second field of view different from the first field of view represents optical information from a second class area or a second plurality of class areas of the surrounding area of the road vehicle (1) as defined in UN ECE Regulation No 46.

According to a further aspect, the present invention provides a data structure for use in a camera-based exterior view assembly for road vehicles, in particular for use in a camera-based exterior rear view assembly mounted to a road vehicle and/or for use in a road vehicle, according to any of the aspects as described before, and/or a data structure generated by a camera-based exterior view assembly for road vehicles, in particular generated by a camera-based exterior rear view assembly mounted to a road vehicle and/or by a road vehicle, according to any the aspects as described before, and/or in particular generated by a method or in the course of a method according to any of the aspects as described before or by a method comprising any of or several of the features of any of the aspects as described before, such data structure comprising combined image data containing
- first image data representing optical radiation captured along a first optical path from a first part of the surrounding area of a road vehicle within a first field of view;
- second image data representing optical radiation captured along a second optical path different from the first optical path from a second part of the surrounding area of the road vehicle within a second field of view different from the first field of view; and
- third image data representing optical radiation captured along a further first optical path different from the first optical path and different from the second optical path from a further first part of the surrounding area of the road vehicle within a further first field of view different from the first field of view and different from the second field of view;
and in particular containing
- first boundary data adapted to create an optical boundary separating said first image data and said further image data from said second image data when said combined image data is displayed, and
- second boundary data adapted to create an optical boundary separating said first image data from said further image data when said combined image data is displayed.

According to a further aspect, the present invention provides a data processing program product adapted for implementing a method for operating a camera-based exterior view assembly for road vehicles, in particular a method for operating a camera-based exterior rear view assembly mounted to a road vehicle, comprising instructions which, when the program is executed by a data processing unit, cause the data processing unit to carry out program steps adapted to implement a method according to any according to any of the aspects as described before, in particular in an arrangement or in an assembly according to any of the aspects as described before, in particular using and/or generating a data structure according to any of the aspects as described before. Such afore mentioned data processing program product can be configured to perform a method according to any embodiment as described in this document, as well as to incorporate any of the technical features of any other embodiment of the invention as described in this document, and to be executed in any of the arrangements or in any of the assemblies as described in this document.

According to a further aspect, the present invention provides a data processing program product adapted for implementing a method for operating a camera-based exterior view assembly for road vehicles, in particular a method for operating a camera-based exterior rear view assembly mounted to a road vehicle, comprising instructions which, when the program is executed by a data processing unit, cause the data processing unit to carry out the following program steps, in particular such program steps adapted to implement a method according to any according to any of the aspects as described before, in particular in an arrangement or in an assembly according to any of the aspects as described before, in particular using and/or generating a data structure according to any of the aspects as described before, thereby carrying out the following program steps:
- a first program step of reading first image data from a first section of an image capturing sensor arrangement of an image capturing system, said first image data being derived from received first optical radiation from a first area of the surrounding area of the road vehicle, received via a first optical path defined by an optical lens system and said image capturing sensor arrangement of said image capturing system;
- a second program step of reading second image data from a second section of an image capturing sensor arrangement of an image capturing system, said second image data being derived from received second optical radiation from a second area of the surrounding area of the road vehicle different from the first area, received via a second optical path different from the first optical path and defined by a light deflection means, said optical lens system and said image capturing sensor arrangement of said image capturing system;
- a third program step of creating combined image data, said combined image data comprising a first image data section and a second image data section; and
- a fourth program step of applying an image post processing and/or image correction algorithm to the combined image data to eliminate one of image distortion and/or differences in image quality and/or differences in image brightness and/or differences in image sharpness, in particular applying to the combined image data an image post processing and/or image correction algorithm based on calibration data and/or applying to the combined image data an artificial intelligence based and/or neuronal network based image post processing and/or image correction algorithm comprising a machine learning model in the form of a pre-trained neural network, in particular in the form of a pre-trained transversal neural network and/or in the form of a pre-trained convolutional neural network; and
- a fifth program step of displaying the first image data and the second image data and/or the combined image data to a vehicle user by means of an image display arrangement or by means of a plurality of display arrangements.

Such afore mentioned data processing program product can be configured to perform a method according to any embodiment as described in this document, as well as to incorporate any of the technical features of any other embodiment of the invention as described in this document, and to be executed in any of the arrangements or in any of the assemblies as described in this document.

The embodiments described above can be combined with each other as desired, if useful. Further possible embodiments, further configurations and implementations of the invention also include combinations, not explicitly mentioned, of features of the invention described herein with respect to the embodiments. In particular, the skilled person will thereby also add individual aspects as improvements or additions to the respective basic form of the present invention.

### BRIEF DESCRIPTION OF THE DRAWINGS

For a more comprehensive understanding of the invention and the advantages thereof, exemplary embodiments of the invention are explained in more detail in the following description with reference to the accompanying figures, in which like reference characters designate like parts and in which the following is shown:
- Fig. 1: a schematic view of a camera-based exterior view assembly for road vehicles, in particular a camera-based exterior rear view assembly mounted to a road vehicle according to a first specific embodiment of the invention;
- Fig. 2: a schematic view of an alternative camera-based exterior view assembly for road vehicles, in particular a camera-based exterior rear view assembly mounted to a road vehicle according to a second specific embodiment of the invention;
- Fig. 3: a schematic top view of a road vehicle, equipped with a camera-based exterior rear view assembly according to the first specific embodiment of the invention according to Fig. 1;
- Fig. 4: a schematic view of a first specific embodiment of a data structure for use in a camera-based exterior view assembly for road vehicles, in particular for use in a camera-based exterior rear view assembly according to Fig. 1 to Fig. 3;
- Fig. 5: a schematic view of a second specific embodiment of a data structure for use in a camera-based exterior view assembly for road vehicles, in particular for use in a camera-based exterior rear view assembly according to Fig. 1 to Fig. 3;
- Fig. 6: a schematic view of objects captured by a camera-based exterior view assembly for road vehicles, in particular by a camera-based exterior rear view assembly mounted to a road vehicle according to the first specific embodiment of the invention according to Fig. 1 in different class areas of the surrounding area of the road vehicle;
- Fig. 7: a schematic top view of a road vehicle, equipped with a camera-based exterior rear view assembly according to the first specific embodiment of the invention according to Fig. 1 and Fig. 3, and a schematic view of objects captured by said camera-based exterior view assembly in different class areas of the surrounding area of the road vehicle according to Fig. 6;
- Fig. 8: a schematic rear view of a road vehicle according to the specific embodiment of the invention according to Fig. 3, Fig. 6, and Fig. 7, equipped with a camera-based exterior rear view assembly according to the first specific embodiment of the invention according to Fig. 1, and a schematic view of objects captured by said camera-based exterior view assembly in different class areas of the surrounding area of the road vehicle according to Fig. 6;
- Fig. 9: a schematic rear view of an alternative embodiment according to Fig. 8, of a road vehicle equipped with a camera-based exterior rear view assembly according to the second specific embodiment of the invention according to Fig. 2, and a schematic view of objects captured by said camera-based exterior view assembly in different class areas of the surrounding area of the road vehicle;
- Fig. 10: a schematic view of a display arrangement displaying image data according to a first specific embodiment of a data structure according to Fig. 4, including image data of objects captured by a camera-based exterior view assembly in different class areas of the surrounding area of the road vehicle according to Fig. 6 to Fig. 9;
- Fig. 11: a schematic view of a display arrangement displaying image data according to a second specific embodiment of a data structure according to Fig. 5, including image data of objects captured by a camera-based exterior view assembly in different class areas of the surrounding area of the road vehicle according to Fig. 6 to Fig. 9;
- Fig. 12: a schematic top view of a road vehicle, equipped with a camera-based exterior rear view assembly according to the first specific embodiment of the invention according to Fig. 1 and Fig. 3, and a schematic view of a first cross section of a curved light deflection device mounted to said camera-based exterior rear view assembly;
- Fig. 13: a schematic side view of a road vehicle, equipped with a camera-based exterior rear view assembly according to the first specific embodiment of the invention according to Fig. 1 and Fig. 3, and a schematic view of a second cross-section of a curved light deflection device mounted to said camera-based exterior rear view assembly;
- Fig. 14: a schematic view of a specific embodiment of a housing of a camera-based exterior rear view assembly and a double-curved light deflection device according to the invention;
- Fig. 15: a schematic view of specific embodiment of an optical arrangement of a camera-based exterior rear view assembly and a first cross-section of a double-curved light deflection device according to the invention;
- Fig. 16: a schematic view of specific embodiment of an optical arrangement of a camera-based exterior rear view assembly and a spatial representation of a double-curved light deflection device according to the invention;
- Fig. 17: a schematic flow diagram of subsequent steps of a method, realized by means of a data processing program product according to a specific embodiment of the invention.

The accompanying drawings are included to provide a further understanding of the present invention, are incorporated in, and constitute a part of this specification. The drawings illustrate particular embodiments of the invention and together with the description serve to explain the principles of the invention. Other embodiments of the invention and many of the attendant advantages of the invention will be readily appreciated, as they become better understood with reference to the following detailed description.

It will be appreciated that common and/or well-understood elements that may be useful or necessary in a commercially feasible embodiment are not necessarily depicted in order to facilitate a more abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not actually required. It will also be understood that the terms and expressions used in the present specification have the ordinary meaning as is accorded to such terms and expressions with respect to their corresponding respective areas of technology, except where specific meanings have otherwise been set forth herein.

### DETAILED DESCRIPTION OF EMBODIMENTS

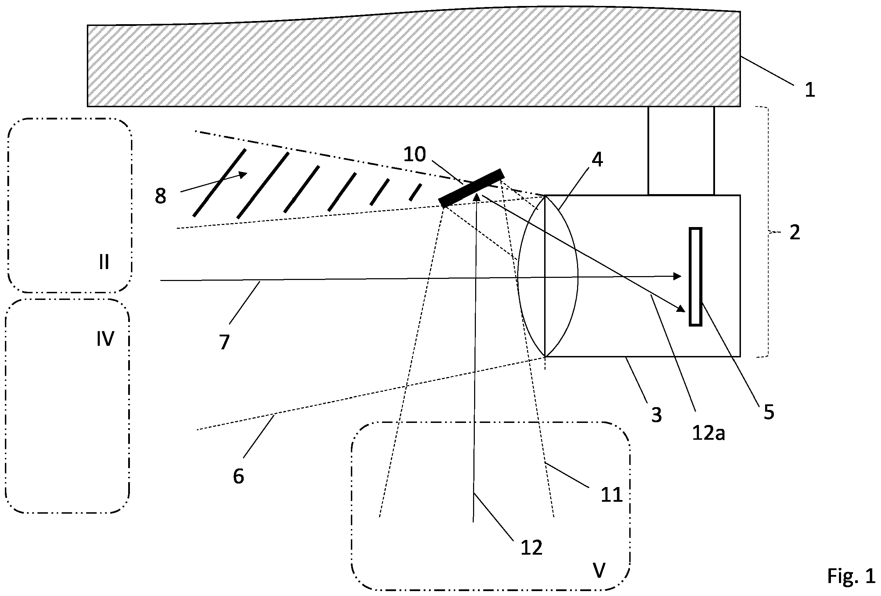

As will be explained with reference to the figures 1 to 17, the present invention relates to a method of, an arrangement for and a data processing program product for a camera-based exterior view assembly for road vehicles, in particular for a camera-based exterior rear view assembly. An image capturing system 3 comprising an optical lens arrangement 4 and an image capturing sensor arrangement 5 and having a first field of view 6 is adapted to capture optical radiation along a first optical path 7 from a first part II, IV of the surrounding area of the road vehicle 1 and a light deflection device 10 is arranged such that said light deflection device 10 is arranged within the first field of view 6 of the image capturing system 3 and configured such that said light deflection device 10 is capturing optical radiation from a second part V, VI of the surrounding area of the road vehicle 1 within a second field of view 11 different from the first field of view 6.

With reference to Fig. 1 of the drawings, a schematic view of a camera-based exterior view assembly 2 for road vehicles, in particular a camera-based exterior rear view assembly 2 mounted to a road vehicle 1 according to a first specific embodiment of the invention is depicted. A camera-based exterior view assembly 2, in particular a camera-based exterior rear view assembly 2, is mounted to a road vehicle 1. The camera-based exterior view assembly 2 comprises an image capturing system 3 comprising an optical lens arrangement 4 and an image capturing sensor arrangement 5, and having a first field of view 6. Said image capturing system 3 is adapted to capture optical radiation along a first optical path 7 from a first part II, IV of the surrounding area of the road vehicle 1 within said first field of view 6, and said a first part II, IV of the surrounding area of the road vehicle 1 corresponds to a first plurality of class areas II, IV of the surrounding area of the road vehicle 1 as defined in UN ECE Regulation No 46.

A light deflection device 10, in particular a mirror device, is mounted to the camera-based exterior rear view assembly 2 and arranged such that said light deflection device 10, in particular said mirror device, is arranged within the first field of view 6 of the image capturing system 3, thereby partly shading the first field of view 6 of the image capturing system 3, creating a shaded field of view area 8. Said light deflection device 10 is capturing optical radiation from a second part V, VI of the surrounding area of the road vehicle 1 within a second field of view 11 different from the first field of view 6 along a second optical path 12, 12a different from the first optical path 7, such that said captured optical radiation from the second part V, VI of the surrounding area of the road vehicle 1 is deflected onto a part of said image capturing sensor arrangement 5 via said optical lens arrangement 4. Said second part V, VI of the surrounding area of the road vehicle 1 corresponds to a second, different class area V, VI or to a second plurality of different class areas V, VI of the surrounding area of the road vehicle 1 as defined in UN ECE Regulation No 46, in particular to blind spot class areas V, VI as defined in UN ECE Regulation No 46 (Class V close-proximity blind spot area directly beside and below the passenger door and/or Class VI front blind spot area immediately in front of the vehicle).

The schematic view according to Fig. 1 is only a simplified representation of the main features of a first embodiment of the invention, with the intention to visualize the main functionalities of the invention. The arrangement, size and shape of the individual functional elements may be varied. In particular the arrangement, shape and size of the light deflection device 10, which may be placed besides, above, or below said optical lens arrangement 4, may vary, and said light deflection device 10 may have a shape different to the flat shape as depicted in Fig. 1, such as a curved shape, as will be explained later in this document.

As will be understood by a person of skill in the art, a field of view in the sense of this invention describes the extent of the scene or subject that can be observed or captured by an optical device, such as a camera, telescope, or binoculars. It is typically expressed in terms of the angle or area that can be seen through the optical system. This means a field of view is what can be seen or imaged within the field covered by the optical system, and it is usually measured in degrees, radians, or a linear dimension. The field of view of a camera-based image capturing system refers to the extent of the scene or subject that the camera can capture in an image. A wider field of view captures more of the surrounding area, while a narrower field of view captures less of the surrounding area.

The field of view of a mirror device is the area or range of visibility that the mirror provides to the observer. Mirror devices can have different field of view characteristics based on their layout and shape, such as wide-angle layout or convex layout, or narrow-angle layout depending on how much of the surrounding area such mirror devices is reflecting.

A field of view in the sense of this invention is related to what can be seen or captured by an optical system; on the other hand, an optical path in the sense of this invention is related to the path that light radiation travels. This means that an optical path in the sense of the invention refers to the physical path that light radiation takes as it travels through an optical system. It includes the sequence of optical components such as lenses, mirrors and sensors that affect the path of the light radiation, including how light radiation is deflected or reflected, redirected or focused to form an image.

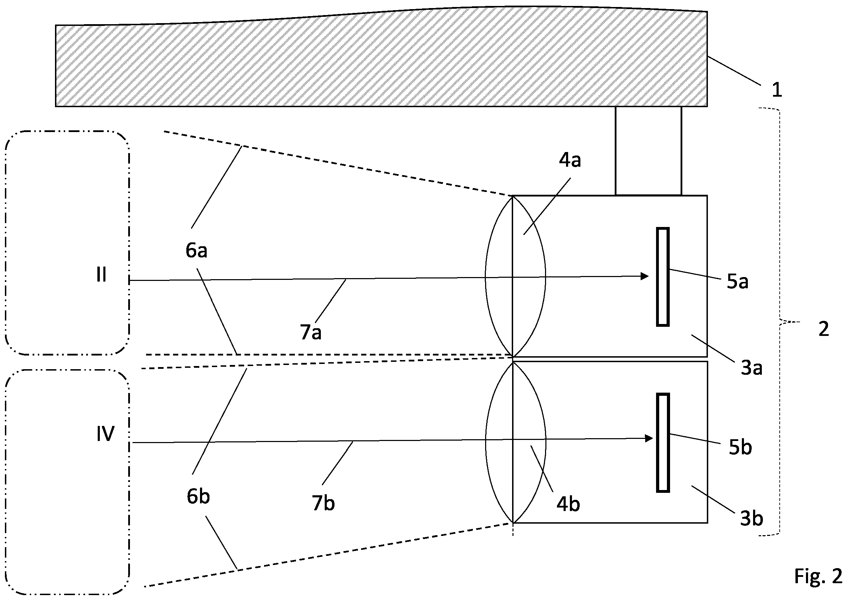

Fig. 2 depicts a schematic view of an alternative camera-based exterior view assembly 2 for road vehicles, in particular an alternative camera-based exterior rear view assembly 2 mounted to a road vehicle 1 according to a second specific embodiment of the invention. A camera-based exterior view assembly 2, in particular a camera-based exterior rear view assembly 2, comprises a plurality of image capturing systems 3a, 3b, comprising a plurality of optical lens arrangements 4a, 4b and a plurality of image capturing sensor arrangements 5a, 5b, and having a plurality of first fields of view 6a, 6b. Said plurality of image capturing systems 3a, 3b is adapted to capture optical radiation along a plurality of first optical paths 7a, 7b, each optical path 7a, 7b correlating with one of a plurality of first fields of view 6a, 6b respectively. Each of the plurality of image capturing systems 3a, 3b is adapted to capture optical radiation along the respective first optical path 7a, 7b from a first part II, IV of the surrounding area of the road vehicle 1, and said a first part II, IV of the surrounding area of the road vehicle 1 corresponds to a first plurality of class areas II, IV of the surrounding area of the road vehicle 1 as defined in UN ECE Regulation No 46. In the embodiment of Fig. 2, each of the plurality of image capturing systems 3a, 3b is adapted to capture optical radiation along one respective first optical path 7a, 7b from one of the areas II, IV of the surrounding area of the road vehicle 1, in particular from one of the class areas II, IV of the surrounding area of the road vehicle 1 as defined in UN ECE Regulation No 46 (Class area II main side-view, Class area IV wide-angle side-view).

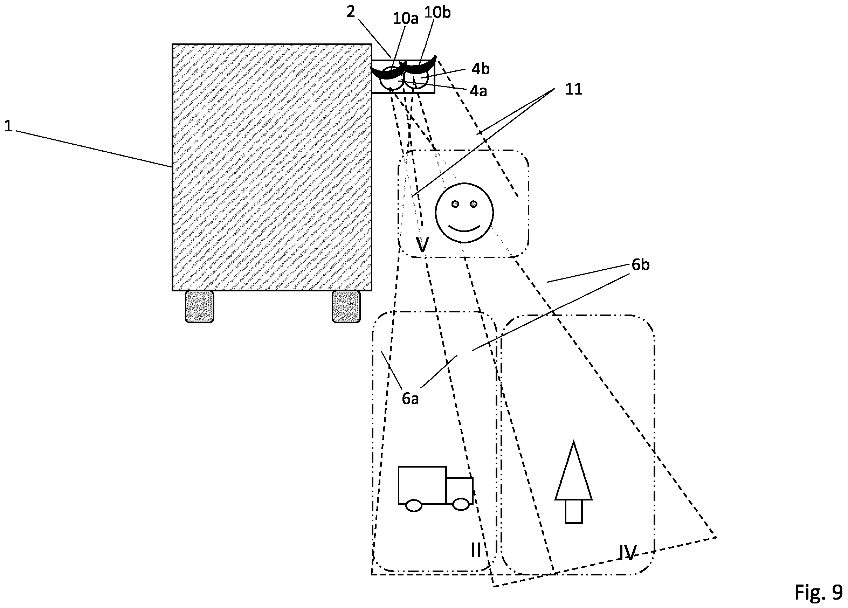

Also in the specific embodiment according to Fig. 2, a light deflection device 10 (not shown in Fig. 2), in particular a mirror device, can be mounted to the camera-based exterior rear view assembly 2 and arranged such that said light deflection device 10, in particular said mirror device, is arranged within the plurality of first fields of view 6a, 6b of the image capturing systems 3a, 3b, as will be explained later with reference to Fig. 9. Similar to Fig. 1, also in the embodiment according to Fig. 2 the light deflection device 10 is capturing optical radiation from a second part V, VI of the surrounding area of the road vehicle 1 within a second field of view 11 different from the plurality of first fields of view 6a, 6b and along a second optical path 12, 12a different from the plurality of first optical paths 7a, 7b, as will be explained later with reference to Fig. 9.

The schematic view according to Fig. 2 is only a simplified representation of the main features of a second embodiment of the invention, with the intention to visualize the main functionalities of the invention. The arrangement, size and shape of the individual functional elements may be varied, in particular the arrangement, shape and size of a light deflection device 10, which will be added to the arrangement as shown in Fig. 2, may vary, i.e. such light deflection device 10 may be placed besides, above, or below said optical lens arrangement 4 and may have a shape different to the flat shape as depicted in Fig. 1, such as a curved shape, as will be explained later in this document.

The advantage of the afore mentioned embodiments of the invention and of the further embodiments as described in this document is that the use of a light deflection device 10 allows a cheaper and more effective solution to allow for the user of the car an improved visibility and observability of the surrounding area of the road vehicle 1, especially of blind spot areas V, VI surrounding area of the road vehicle 1, avoiding the need for additional costly camera based image capturing systems 3, 3a, 3b.

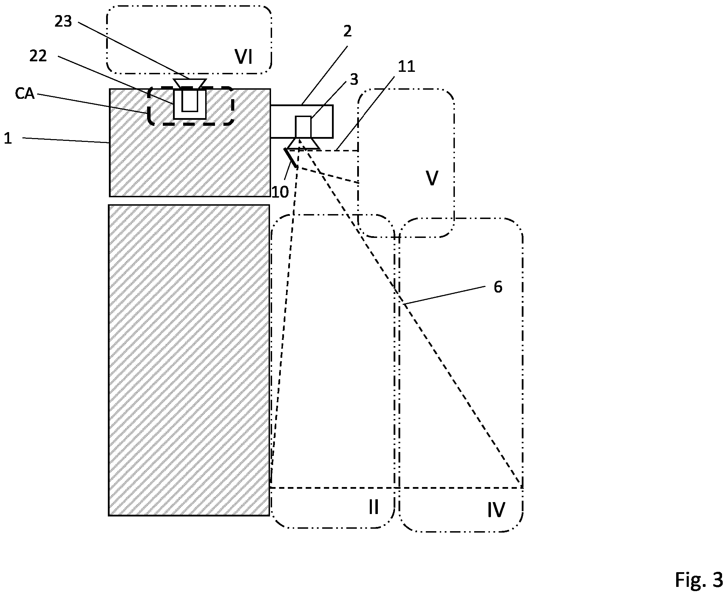

With respect to Fig. 3, a schematic top view of a road vehicle 1 is depicted, such road vehicle 1 being equipped with a camera-based exterior view assembly 2 for road vehicles, in particular a camera-based exterior rear view assembly 2 according to the first specific embodiment of the invention as depicted in and described with respect to Fig. 1. Such road vehicle 1 can be a heavy goods vehicle such as a truck, as schematically depicted in Fig. 3, or it can be any other kind of road vehicle, such as a passenger car, a passenger bus, an agriculture vehicle etc.

Said camera-based exterior view assembly 2 is mounted to the road vehicle 1 and comprises an image capturing system 3, which has a first field of view 6. Said image capturing system 3 is adapted to capture optical radiation from a first part II, IV of the surrounding area of the road vehicle 1 within said first field of view 6, and said a first part II, IV of the surrounding area of the road vehicle 1 corresponds to two class areas II, IV of the surrounding area of the road vehicle 1 as defined in UN ECE Regulation No 46, i.e. Class area II main side-view and Class area IV wide-angle side-view.

A light deflection device 10, in particular a mirror device, is mounted to the camera-based exterior rear view assembly 2 and arranged such that said light deflection device 10 is capturing optical radiation from a second part V of the surrounding area of the road vehicle 1 within a second field of view 11 different from the first field of view 6, wherein said second part V of the surrounding area of the road vehicle 1 corresponds to a second, different class area V as defined in UN ECE Regulation No 46, in particular to blind spot class areas V as defined in UN ECE Regulation No 46, i.e. Class V close-proximity blind spot area directly beside and below the passenger door of the road vehicle 1.

Said first part II, IV of the surrounding area of the road vehicle 1 and said second part V of the surrounding area of the road vehicle 1 may be separate areas of the of the surrounding of the road vehicle 1 or partially overlapping areas of the of the surrounding of the road vehicle 1, as shown in Fig. 3.

Fig. 3 also depicts a further camera-based exterior view assembly 22, in particular a camera-based exterior front view assembly 22, comprising a further image capturing system 23 which is adapted to collect optical radiation from a front area VI of the surrounding area of the road vehicle 1, in particular from a front class area VI of the surrounding area of the road vehicle 1 as defined in UN ECE Regulation No 46, i.e. Class VI front blind spot area immediately in front of the vehicle 1. Said further camera-based exterior view assembly 22 and/or said further image capturing system 23 is arranged in a center area CA of the front region of the vehicle 1, and is configured as part of a Move-Off Information System (MOIS) of the road vehicle 1.

The advantage of the afore mentioned embodiment of the invention according to Fig. 3 and of a possible use of such embodiment together with one of several of the further embodiments as described in this document is that the placing of a further camera-based exterior view assembly 22 and/or said further image capturing system 23 - instead for example at a corner of the vehicle 1 - brings market advantages, as better coverage and better visibility and observability of the Class VI front blind spot area immediately in front of the vehicle 1 can be achieved and a more effective and reliable Move-Off Information System (MOIS) can be provided.

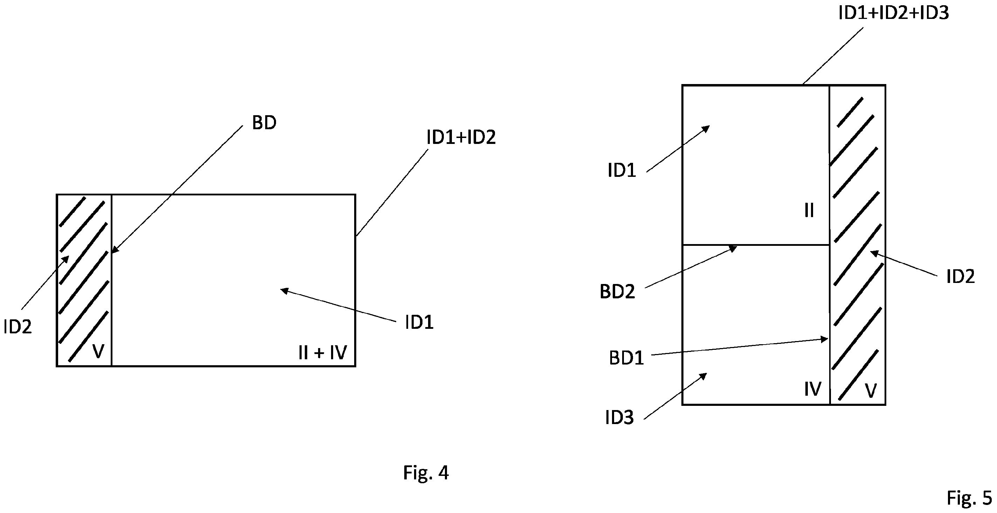

With reference to Fig. 4 and Fig 5 of the drawings, schematic views of a first and of a second specific embodiment of a data structure for use in a camera-based exterior view assembly for road vehicles are provided, in particular for use in a camera-based exterior rear view assembly according to any of the embodiments of Fig. 1 to Fig. 3.

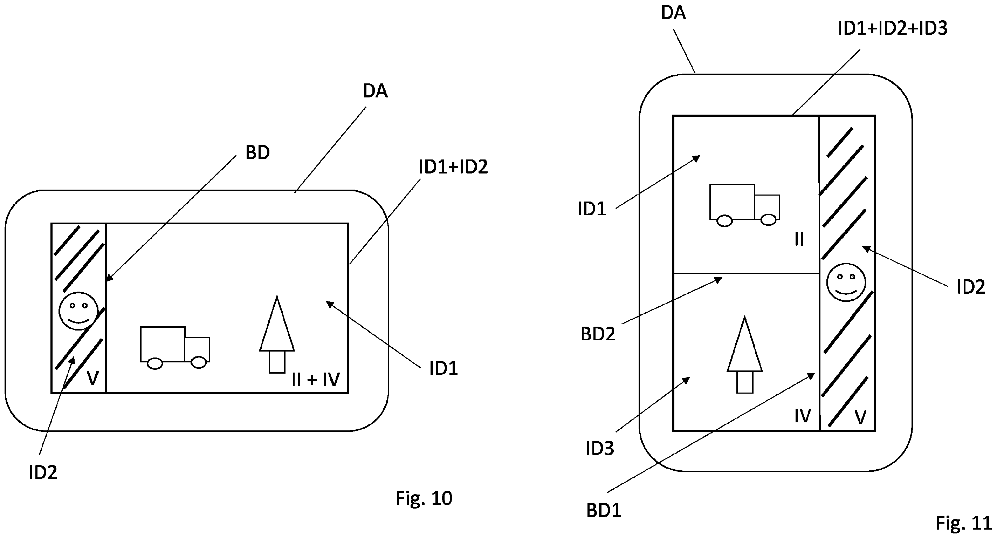

Fig. 4 depicts a data structure for use in a camera-based exterior view assembly 2 for road vehicles, in particular for use in a camera-based exterior rear view assembly 2 according to any of the embodiments of Fig. 1 to Fig. 3 and/or a data structure generated by such afore mentioned a camera-based exterior view assembly 2, such data structure comprising combined image data ID1+ID2 containing first image data ID1 representing optical radiation captured along a first optical path 7, 7a, 7b from a first part II, IV of the surrounding area of a road vehicle 1 within a first field of view 6, 6a, 6b and second image data ID2 representing optical radiation captured along a second optical path 12, 12a different from the first optical path 7 from a second part V of the surrounding area of a road vehicle 1 within a second field of view 11 different from the first field of view 6, 6a, 6b. The combined image data ID1+ID2 may also contain boundary data BD adapted to create a displayable optical boundary separating the first image data ID1 from the second image data ID2 when said combined image data ID1+ID2 is displayed by means of a display arrangement DA as shown in Fig. 10. Said boundary data BD may be created from optical hardware boundaries in the optical system captured of the camera-based exterior view assembly 2, or such boundary data BD may be created by a software algorithm, such as an artificial intelligence and/or neural network based software algorithm, to create a user-friendly display of combined image data ID1+ID2.

With reference to the embodiments according to Fig. 1 to Fig. 3, said first image data ID1, which is representing optical radiation captured along a first optical path 7, 7a, 7b from a first part II, IV of the surrounding area of a road vehicle 1 within a first field of view 6, 6a, 6b, represents optical information from a first class area II, IV or a first plurality of class areas II, IV of the surrounding area of the road vehicle 1 as defined in UN ECE Regulation No 46, and said second image data ID2, which is representing optical radiation captured along a second optical path 12, 12a different from the first optical path 7, 7a, 7b from a second part V, VI of the surrounding area of a road vehicle 1 within a second field of view 11 different from the first field of view 6, 6a, 6b, represents optical information from a second class area V, VI or a second plurality of class areas V, VI of the surrounding area of the road vehicle 1 as defined in UN ECE Regulation No 46, in particular from a blind spot class areas V as defined in UN ECE Regulation No 46, i.e. Class V close-proximity blind spot area directly beside and below the passenger door of the road vehicle 1 and/or from a front class area VI of the surrounding area of the road vehicle 1 as defined in UN ECE Regulation No 46, i.e. Class VI front blind spot area immediately in front of the vehicle 1.

Fig. 5 depicts a data structure for use in a camera-based exterior view assembly 2 for road vehicles, in particular for use in a camera-based exterior rear view assembly 2 according to any of the embodiments of Fig. 1 to Fig. 3 and/or a data structure generated by such afore mentioned a camera-based exterior view assembly 2, such data structure comprising combined image data ID1+ID2+ID3 containing first image data ID1, ID3 representing optical radiation captured along a first optical path 7, 7a, 7b from a first part II, IV of the surrounding area of a road vehicle 1 within a first field of view 6, 6a, 6b and second image data ID2 representing optical radiation captured along a second optical path 12, 12a different from the first optical path 7 from a second part V, VI of the surrounding area of a road vehicle 1 within a second field of view 11 different from the first field of view 6, 6a, 6b. With reference to the embodiment of Fig. 3, first image data ID1 may represent optical radiation captured along a first optical path 7a from a first part II (Class area II main side-view as defined in UN ECE Regulation No 46) of the surrounding area of a road vehicle 1 within a first field of view 6a, and first image data ID3 may represent optical radiation captured along a first optical path 7a from a first part IV (Class area IV wide-angle side-view as defined in UN ECE Regulation No 46) of the surrounding area of a road vehicle 1 within a first field of view 6b.

The combined image data ID1+ID2+ID3 may also contain boundary data BD1, BD2 adapted to create a displayable optical boundary separating the first image data ID1, ID3 from each other and/or from the second image data ID2 when said combined image data ID1+ID2+ID3 is displayed by means of a display arrangement DA as shown in Fig. 11. As mentioned before with respect to Fig. 4, said boundary data BD may be created from optical hardware boundaries in the optical system captured of the camera-based exterior view assembly 2, or such boundary data BD may be created by a software algorithm, such as an artificial intelligence and/or neural network based software algorithm, to create a user-friendly display of combined image data ID1+ID2+ID3.

With reference to the embodiments according to Fig. 1 to Fig. 3, said first image data ID1, ID3, which is representing optical radiation captured along a first optical path 7, 7a, 7b from a first part II, IV of the surrounding area of a road vehicle 1 within a first field of view 6, 6a, 6b, represents optical information from a first class area II, IV or a first plurality of class areas II, IV of the surrounding area of the road vehicle 1 as defined in UN ECE Regulation No 46, and said second image data ID2, which is representing optical radiation captured along a second optical path 12, 12a different from the first optical path 7, 7a, 7b from a second part V, VI of the surrounding area of a road vehicle 1 within a second field of view 11 different from the first field of view 6, 6a, 6b, represents optical information from a second class area V, VI or a second plurality of class areas V, VI of the surrounding area of the road vehicle 1 as defined in UN ECE Regulation No 46, in particular from a blind spot class areas V as defined in UN ECE Regulation No 46, i.e. Class V close-proximity blind spot area directly beside and below the passenger door of the road vehicle 1 and/or from a front class area VI of the surrounding area of the road vehicle 1 as defined in UN ECE Regulation No 46, i.e. Class VI front blind spot area immediately in front of the vehicle 1.

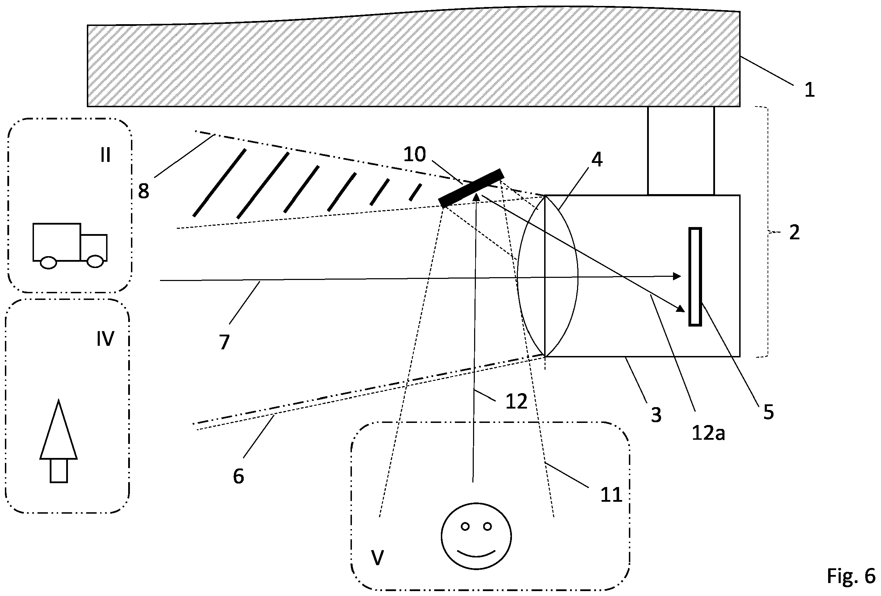

Fig. 6 depicts a schematic view of different objects captured by a camera-based exterior view assembly 2 for road vehicles, in particular by a camera-based exterior rear view assembly 2 mounted to a road vehicle 1 according to the first specific embodiment of the invention according to Fig. 1 and/or according to Fig. 3 in different class areas II, IV, V of the surrounding area of the road vehicle 1. As an example, one object is depicted in each of the different class areas II, IV, V of the surrounding area of the road vehicle 1, in particular in class areas II IV, V of the surrounding area of the road vehicle 1 as defined in UN ECE Regulation No 46, and captured within the different fields of view 6, 11 of image capturing system 3 and of a light deflection device 10, respectively. Again, class area V of the surrounding area of the road vehicle 1 in particular represents a blind spot class areas V as defined in UN ECE Regulation No 46, i.e. Class V close-proximity blind spot area directly beside and below the passenger door of the road vehicle 1.

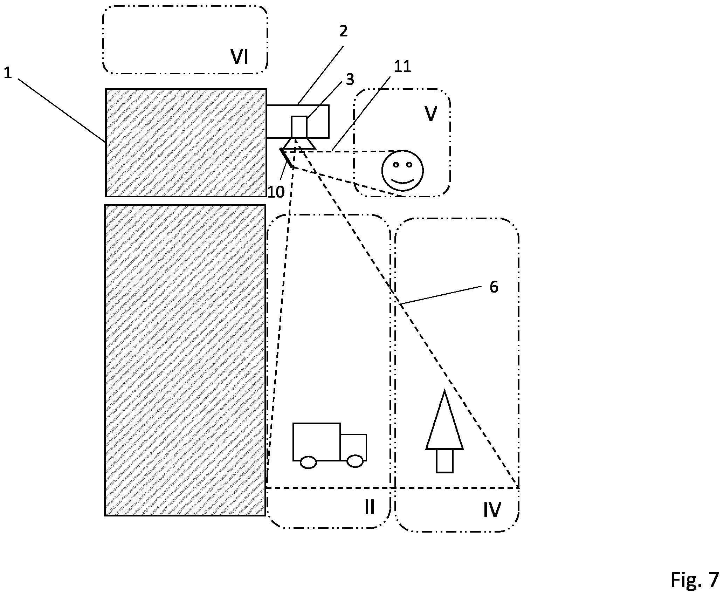

Fig. 7 depicts a schematic top view of the embodiment according to Fig. 6. In particular, Fig. 6 depicts a road vehicle, such as a heavy goods vehicle, i.e. a truck, equipped with a camera-based exterior rear view assembly 2 according to the first specific embodiment of the invention according to Fig. 1 and Fig. 3, and - as Fig. 6 - depicts a schematic view of objects captured by said camera-based exterior view assembly in different class areas II, IV, V of the surrounding area of the road vehicle 1 as described before with reference to Fig. 6. One object is depicted in each of the different class areas II, IV, V of the surrounding area of the road vehicle 1, in particular in class areas II IV, V of the surrounding area of the road vehicle 1 as defined in UN ECE Regulation No 46, and captured within the different fields of view 6, 11 of image capturing system 3 and of a light deflection device 10, respectively.

In the embodiment according to Fig. 7, class area V of the surrounding area of the road vehicle 1 represents a blind spot class areas V as defined in UN ECE Regulation No 46, i.e. Class V close-proximity blind spot area directly beside and below the passenger door of the road vehicle 1, and the object captured in this class area V may be a pedestrian walking besides the road vehicle 1, i.e. besides a truck, in this close-proximity blind spot area directly beside and below the passenger door of the truck.

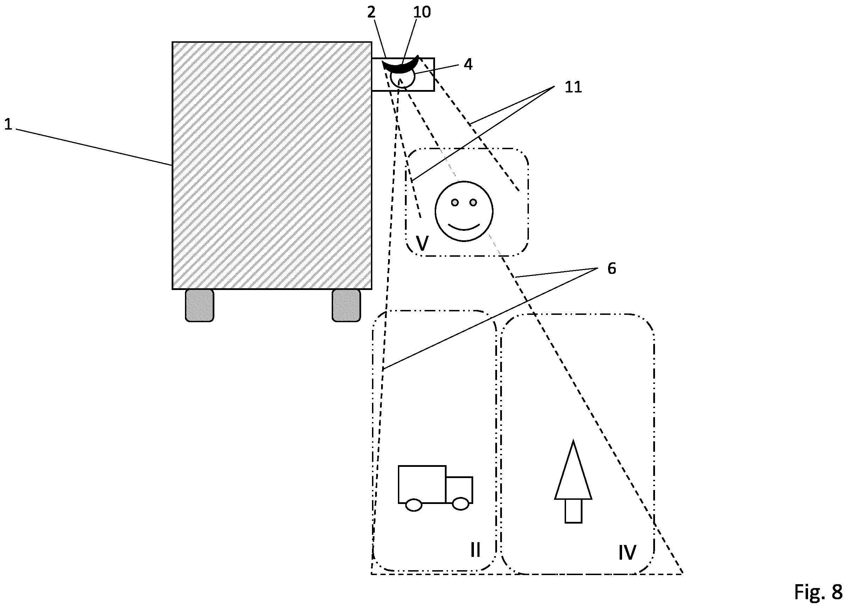

Fig. 8 depicts the situation of the embodiments according to Fig. 6 and Fig. 7 from a rear view, i.e. Fig. 8 depicts a schematic rear view of a road vehicle 1 according to the specific embodiment of the invention according to Fig. 3, Fig. 6, and Fig. 7, equipped with a camera-based exterior rear view assembly 2 according to the first specific embodiment of the invention according to Fig. 1. One object is depicted in each of the different class areas II, IV, V of the surrounding area of the road vehicle 1, in particular in class areas II IV, V of the surrounding area of the road vehicle 1 as defined in UN ECE Regulation No 46, and captured within the different fields of view 6, 11 of image capturing system 3 and of a light deflection device 10, in particular of a curved mirror device 10, respectively.

With reference to Fig. 9, an alternative embodiment of the invention according to Fig. 8 is depicted. Fig. 9 shows a schematic rear view of a road vehicle 1 equipped with a camera-based exterior rear view assembly according to the second specific embodiment of the invention according to Fig. 2, and a schematic view of objects captured by said camera-based exterior view assembly 2 in different class areas II, IV, V of the surrounding area of the road vehicle 1. Light deflection devices 10a, 10b, in particular curved mirror devices, are mounted to the camera-based exterior rear view assembly 2 and arranged such that each said light deflection device 10a, 10b, in particular said curved mirror device, is arranged within the plurality of first fields of view 6a, 6b of the image capturing systems 3a, 3b, in the proximity of their respective optical lens arrangements 4a, 4b. Similar to the embodiment of Fig. 8, a light deflection device 10a, 10b is capturing optical radiation from a second part V of the surrounding area of the road vehicle 1 within a second field of view 11 different from the plurality of first fields of view 6a, 6b. The first fields of view 6a, 6b can be partially overlapping fields of view 6a, 6b or entirely overlapping fields of view 6a, 6b or can be separate, non-overlapping fields of view 6a, 6b. One object is depicted in each of the different class areas II, IV, V of the surrounding area of the road vehicle 1, in particular in class areas II IV, V of the surrounding area of the road vehicle 1 as defined in UN ECE Regulation No 46, and - separately - captured within the different fields of view 6a, 6b, 11 of image capturing systems 3a, 3b according to Fig. 2 and of a light deflection device 10a, 10b, in particular of curved mirror device 10a, 10b, respectively.

Fig. 10 depicts a schematic view of a display arrangement DA displaying image data according to a first specific embodiment of a data structure according to Fig. 4, including image data of the afore mentioned objects captured by a camera-based exterior view assembly 2 in the afore mentioned different class areas II, IV, V of the surrounding area of the road vehicle 1 according to Fig. 6 to Fig. 9. The display arrangement DA is adapted to display combined image data ID1+ID2 containing first image data ID1 representing optical radiation captured from a first part II, IV of the surrounding area of a road vehicle 1 and second image data ID2 representing optical radiation captured from a second part V of the surrounding area of a road vehicle 1. The displaced combined image data ID1+ID2 may also contain an optical boundary generated from boundary data BD separating the first image data ID1 from the second image data ID2 when said combined image data ID1+ID2 is displayed by means of a display arrangement DA, as shown in Fig. 10.

Fig. 11 depicts a schematic view of a display arrangement displaying image data according to a second specific embodiment of a data structure according to Fig. 5, including image data of the afore mentioned objects captured by a camera-based exterior view assembly 2 as described with reference to Fig. 2 in different class areas II, IV, V of the surrounding area of the road vehicle 1 according to Fig. 6 to Fig. 9. The display arrangement DA is adapted to display combined image data ID1+ID2+ID3 containing first image data ID1, ID3 representing optical radiation captured separately by the plurality of image capturing systems 3a, 3b from a plurality of first part II, IV of the surrounding area of a road vehicle 1 as described before with reference to Fig. 2, and second image data ID2 representing optical radiation captured from a second part V of the surrounding area of a road vehicle 1. The displaced combined image data ID1+ID2+ID3 may also contain an optical boundaries generated from boundary data BD1, BD2, separating the first image data ID1 and first image data ID3 and separating both of first image data ID1 and first image data ID3 from the second image data ID2 when said combined image data ID1+ID2+ID3 is displayed by means of a display arrangement DA, as shown in Fig. 11. Alternatively, first image data ID1 and/or first image data ID3 and/or second image data ID2 can be displayed by means of a plurality of separate display arrangements DA.

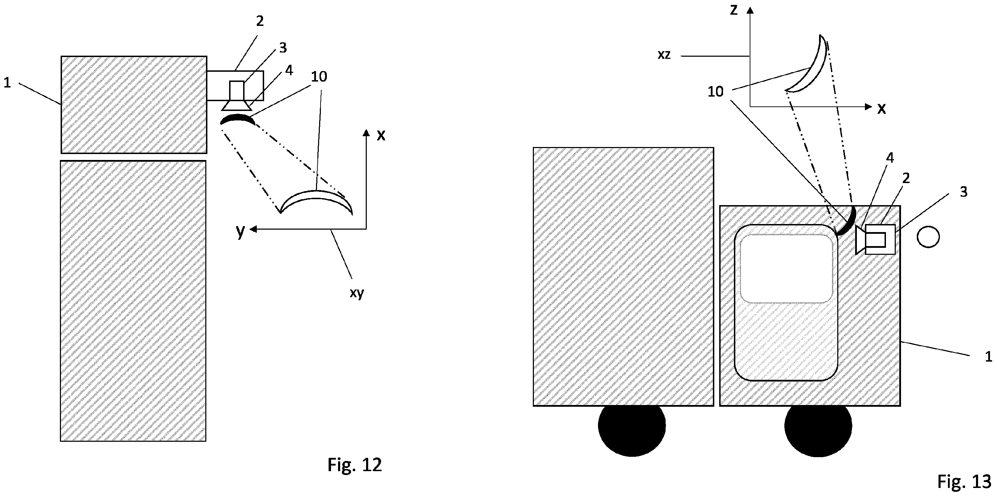

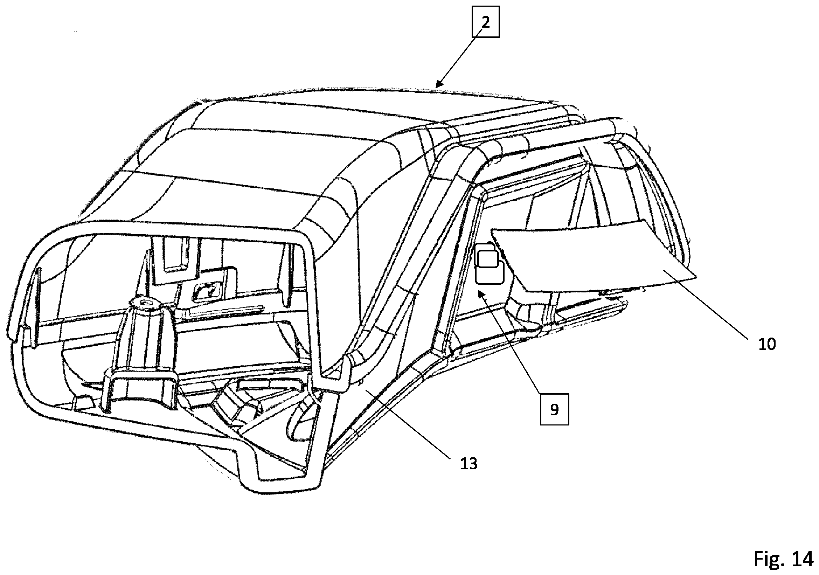

As depicted in enlarged views in the top view of a road vehicle 1 according to Fig. 12 and in the side view of a road vehicle according to Fig. 13 respectively, in an embodiment of the invention the afore mentioned light deflection device 10 may be a curved mirror device, in particular a mirror device that has a first curved shape in a first cross-sectional plane xy and/or that has a - first or second - curved shape in a second cross-sectional plane xz perpendicular to the first cross-sectional plane xy. A specific example of such embodiment of the invention will be shown and explained in more detail with respect to Fig. 14. The afore mentioned light deflection device 10 may in particular be a double-curved mirror device that has a first curved shape in a first cross-sectional plane xy and that has a second curved shape in a second cross-sectional plane xz perpendicular to the first cross-sectional plane xy.

Fig. 14 depicts a schematic view of a specific embodiment of a housing 13 of a camera-based exterior rear view assembly 2 and of a specific example of a double-curved light deflection device 10, i.e. of a double-curved mirror device, according to the invention, which is arranged in front of an opening 9 of the housing 13. An image capturing system 3, 3a, 3b as described in any of the embodiments before can be mounted inside the housing 13, and the optical lens arrangement 4, 4a, 4b can be arranged in the opening 9 of the housing 13.

In all of the afore mentioned embodiments of the invention, the light deflection device 10 can be movably mounted to the camera-based exterior rear view assembly 2 and/or to the road vehicle 1, in particular to adapt the afore mentioned field of view 11 of said light deflection device 10 and/or the afore mentioned second optical path 12, 12a of said light deflection device 10. For example, the light deflection device 10 can for example be configured as a curved mirror device 10 mounted to a hinge arrangement or to a joint arrangement, or the light deflection device 10 can for example be configured as a rotating cone or mounted on a rotating cone.

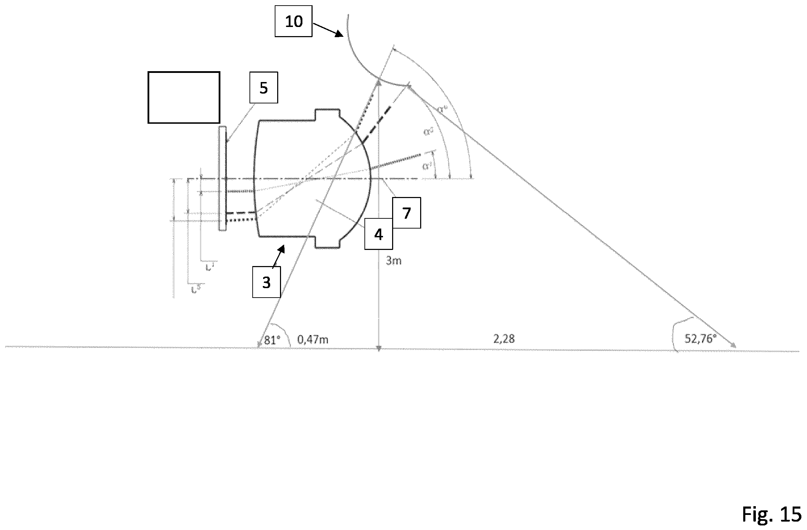

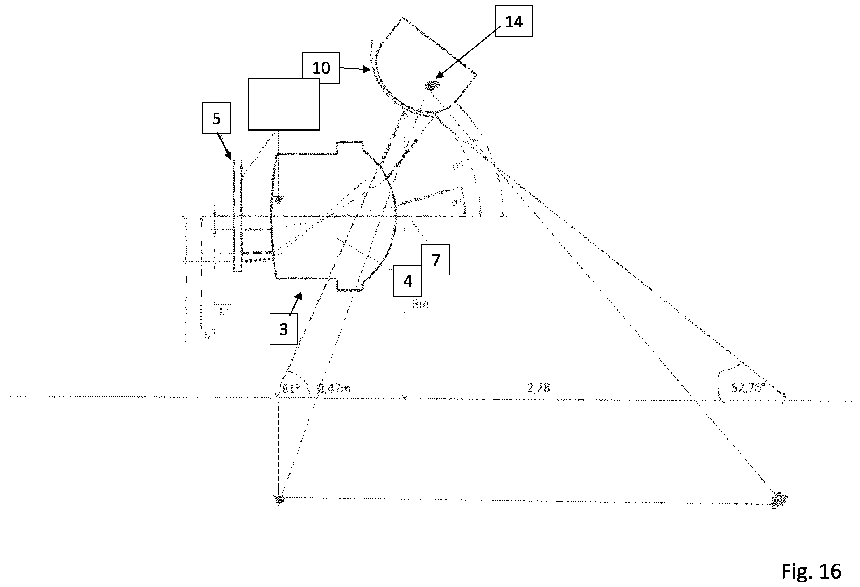

Fig. 15 depicts a schematic view of specific embodiment of an optical arrangement of a camera-based exterior rear view assembly and a first cross-section of a double-curved light deflection device 10 according to the invention, i.e. a double-curved mirror device 10 as described before, and Fig. 16 depicts a schematic view of specific embodiment of an optical arrangement of a camera-based exterior rear view assembly and a spatial representation of a double-curved light deflection device 10 according to the invention, i.e. a double-curved mirror device 10 as described before. Both figures depict an image capturing system 3, having an optical lens arrangement 4 and an image capturing sensor arrangement 5, which define an optical path 7 and/or an optical axis 7. A light deflection device 10, configured as a curved or double-curved mirror device 10 is arranged in the proximity of the image capturing system 3, in particular in the proximity of the optical lens arrangement 4.

A light ray path goes from the focal point to the curved mirror and then covers the desired area according to the law of angle of incidence = angle of reflection. In the example according to Fig. 15 and Fig. 16, the curved mirror 10 has a slope of 0 at the lowest point and a slope at the other side that is at right angles to the beam path of 81°. Behind the focal point, the desired area can be projected on the image capturing sensor arrangement 5. The afore mentioned parameters represent only a specific example, because the parameters of the image capturing system 3, of the optical lens arrangement 4 and of the image capturing sensor arrangement 5 can be varied in a relatively wide range. If said parameters are adapted, so that e.g. 70% of the surface of the image capturing sensor arrangement 5 are used to capture optical radiation from the afore mentioned first parts II, IV of the surrounding area, then 30% of the surface of the image capturing sensor arrangement 5 are available capturing optical radiation from the afore mentioned second part V of the surrounding area of the road vehicle 1. If for example the image capturing sensor arrangement 5 comprises a 5 MB chip, in this example 1.5 MB are available for capturing optical radiation from the afore mentioned second part V of the surrounding area of the road vehicle 1.

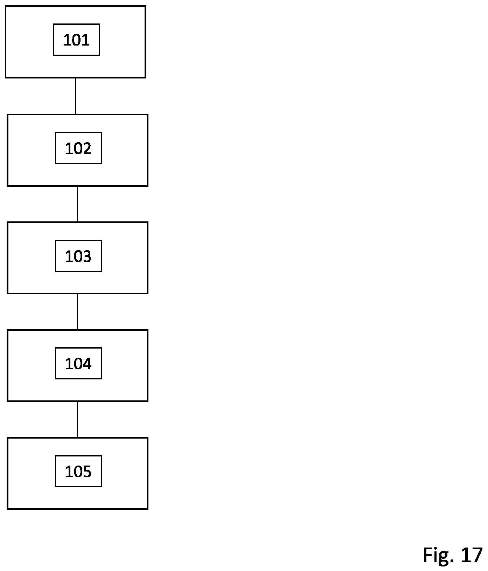

The figures 15 and 16 both show a 2-dimensional representation. In a second direction of the curvature of the double-curved mirror device 10, the range of the width is also defined. The example reflection point 14 in Fig. 16 is assumed to be on the side curved area of the double-curved mirror device 10. Reflection points in the image describe the outermost ray path of a camera image, which is determined by their aperture angle. Fig. 17 depicts a schematic flow diagram of subsequent steps of a method according to a specific embodiment of the invention, realized by means of a data processing program product according to a specific embodiment of the invention. This specific embodiment of data processing program product adapted for implementing a method for operating a camera-based exterior view assembly 2 for road vehicles 1, in particular a method for operating a camera-based exterior rear view assembly 2 mounted to a road vehicle 1, comprises instructions which, when the program is executed by a data processing unit, cause the data processing unit to carry out the following program steps, in particular using and/or generating a data structure according to Fig. 4 and/or Fig. 5:
- a first program step 101 of reading first image data ID1, ID3 from a first section of an image capturing sensor arrangement 5, 5a, 5b of an image capturing system 3, 3a, 3b, said first image data ID1, ID3 being derived from received first optical radiation from a first area II, IV of the surrounding area of the road vehicle 1, received via a first optical path 7, 7a, 7b defined by an optical lens system 4, 4a, 4b and said image capturing sensor arrangement 5, 5a, 5b of said image capturing system 3, 3a, 3b;
- a second program step 102 of reading second image data ID2 from a second section of an image capturing sensor arrangement 5, 5a, 5b of an image capturing system 3, 3a, 3b, said second image data ID2 being derived from received second optical radiation from a second area V, VI of the surrounding area of the road vehicle 1 different from the first area II, IV, received via a second optical path 12, 12a different from the first optical path 7, 7a, 7b and defined by a light deflection means 10, said optical lens system 4, 4a, 4b and said image capturing sensor arrangement 5, 5a, 5b of said image capturing system 3, 3a, 3b;
- a third program step 103 of creating combined image data ID1+ID2, ID1+ID2+ID3, said combined image data ID1+ID2, ID1+ID2+ID3 comprising a first image data section ID1, ID3) and a second image data section ID2; and
- a fourth program step 104 of applying an image post processing and/or image correction algorithm to the combined image data ID1+ID2, ID1+ID2+ID3 to eliminate one of image distortion and/or differences in image quality and/or differences in image brightness and/or differences in image sharpness, in particular applying to the combined image data ID1+ID2, ID1+ID2+ID3 an image post processing and/or image correction algorithm based on calibration data and/or applying to the combined image data an artificial intelligence based and/or neuronal network based image post processing and/or image correction algorithm comprising a machine learning model in the form of a pre-trained neural network, in particular in the form of a pre-trained transversal neural network and/or in the form of a pre-trained convolutional neural network; and
- a fifth program step 105 of displaying the first image data ID1, ID3 and the second image data ID2 and/or the combined image data ID1+ID2, ID1+ID2+ID3 to a vehicle user by means of an image display arrangement DA or by means of a plurality of display arrangements DA.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### LIST OF USED REFERENCE SIGNS

- 1: vehicle
- 2: camera-based exterior view assembly
- 3: image capturing system
- 4: optical lens arrangement
- 5: image capturing sensor arrangement
- 6, 6a: first field of view
- 6b: further first field of view
- 7, 7a: first optical path
- 7b: further first optical path
- 8: shaded field of view area
- 9: opening
- 10, 10a, 10b: light deflection device
- 11: second field of view
- 12, 12a: second optical path
- 13: housing
- 14: reflection point
- 22: further camera-based exterior view assembly
- 23: further image capturing system
- BD: boundary data
- BD1: first boundary data
- BD2: second boundary data
- CA: center area
- DA: image display arrangement
- ID1: first image data
- ID2: second image data
- ID3: third image data
- ID1+ID2: combined image data
- ID1+ID2+ID3: combined image data
- xy: first cross-sectional plane
- xz: second cross-sectional plane
- II: first part of the surrounding area
- IV: further first part of the surrounding area
- V: second part of the surrounding area
- VI: further second part of the surrounding area

## Claims

1. A camera-based exterior view assembly (2) , in particular a camera-based exterior rear view assembly (2), that is configured to be mounted to a road vehicle (1), the camera-based exterior view assembly (2) comprising:
at least one image capturing system (3) or a plurality of image capturing systems (3a, 3b), comprising an optical lens arrangement (4) or a plurality of optical lens arrangements (4a, 4b) and an image capturing sensor arrangement (5) or a plurality of image capturing sensor arrangements (5a, 5b), and having a first field of view (6) or a plurality of first fields of view (6a, 6b),
- said image capturing system (3) or plurality of image capturing systems (3a, 3b) being adapted to capture optical radiation from a first part (II, IV) of the surrounding area of the road vehicle (1) within said first field of view (6) or within said plurality of first fields of view (6a, 6b);
a light deflection device (10, 10a, 10b), mounted to the camera-based exterior view assembly (2) and/or to the road vehicle (1), and configured such that
- said light deflection device (10, 10a, 10b) is arranged within the first field of view (6) of the image capturing system (3) or within the plurality of first fields of view (6a, 6b) of the image capturing systems (3a, 3b),
- said light deflection device (10, 10a, 10b) is capturing optical radiation from a second part (V, VI) of the surrounding area of the road vehicle (1) within a second field of view (11) different from the first field of view (6) or different from the plurality of first fields of view (6a, 6b), and such that
- said captured optical radiation from the second part (V, VI) of the surrounding area of the road vehicle (1) is deflected onto a part of said image capturing sensor arrangement (5) via said optical lens arrangement (4) or onto a part of said plurality of image capturing sensor arrangements (5a, 5b) via said plurality of optical lens arrangements (4a, 4b).

2. The camera-based exterior view assembly (2) according to claim 1, that is configured to be mounted to the road vehicle (1), wherein
- said light deflection device (10, 10a, 10b) is arranged within the first field of view (6) of the image capturing system (3) or within the plurality of first fields of view (6a, 6b) of the image capturing systems (3a, 3b), thereby partly shading the first field of view (6) of the image capturing system (3) or the plurality of first fields of view (6a, 6b) of the image capturing systems (3a, 3b).

3. The camera-based exterior view assembly according to any of the preceding claims, wherein
- said first field of view (6) or said plurality of first fields of view (6a, 6b) of said image capturing system (3) or said plurality of image capturing systems (3a, 3b) are adapted to collect optical radiation from a first class area (II, IV) or from a first plurality of class areas (II, IV) of the surrounding area of the road vehicle (1) as defined in UN ECE Regulation No 46; and
- said second field of view (11) of said light deflection device (10, 10a, 10b) is adapted to collect optical radiation from a second different class area (V, VI) or from a second plurality of different class areas (V, VI) of the surrounding area of the road vehicle (1) as defined in UN ECE Regulation No 46.

4. The camera-based exterior view assembly according to any of the preceding claims, wherein said light deflection device (10, 10a, 10b) has a first curved shape in a first cross-sectional plane (xy) and a second curved shape in a second cross-sectional plane (xz) perpendicular to the first cross-sectional plane (xy).

5. The camera-based exterior view assembly according to any of the preceding claims, wherein the light deflection device (10, 10a, 10b) is movably mounted to the camera-based exterior rear view assembly (2) and/or to the road vehicle (1), in particular to adapt said second field of view (11) of said light deflection device (10, 10a, 10b) and/or said second optical path (12, 12a) of said light deflection device (10, 10a, 10b).

6. The camera-based exterior view assembly according to any of the preceding claims, wherein the at least one image capturing system (3, 3a, 3b) is a Camera Monitoring System, in particular a rear view Camera Monitoring System.

7. A road vehicle (1) comprising a first camera-based exterior view assembly (2) according to any of the claims 1 to 6, in particular further comprising a further camera-based exterior view assembly (22), in particular a camera-based exterior front view assembly (22), comprising a further image capturing system (23) which is
- adapted to collect optical radiation from a front area (VI) of the surrounding area of the road vehicle (1), in particular from a front class area (VI) of the surrounding area of the road vehicle (1) as defined in UN ECE Regulation No 46,
- which is arranged in a center area (CA) of the front region of the vehicle (1), and
- which is configured as part of a Move-Off Information System (MOIS) of the road vehicle (1).

8. Method for operating a camera-based exterior view assembly (2) for road vehicles, in particular for operating a camera-based exterior rear view assembly (2) mounted to a road vehicle (1), in particular for use in a camera-based exterior view assembly (2) for road vehicles according to any of claims 1 to 6 and/or for use in a road vehicle (1) according to claim 7, the method comprising:
capturing optical radiation along a first optical path (7, 7a, 7b) from a first part (II, IV) of the surrounding area of the road vehicle (1) within a first field of view (6, 6a, 6b), using an image capturing system (3, 3a, 3b), comprising an optical lens arrangement (4, 4a, 4b) and an image capturing sensor arrangement (5, 5a, 5b) providing said first field of view (6, 6a, 6b);
using and/or orienting a light deflection device (10, 10a, 10b) configured such that
- said light deflection device (10, 10a, 10b) is capturing optical radiation from a second part (V, VI) of the surrounding area of the road vehicle (1) different from the first area (II, IV) within a second field of view (11) different from the first field of view (6, 6a, 6b) and along a second optical path (12, 12a) different from the first optical path (7, 7a, 7b); and such that
- said captured optical radiation from a second part (V, VI) of the surrounding area of the road vehicle (1) is deflected onto a part of said image capturing sensor arrangement (5, 5a, 5b) via said optical lens arrangement (4, 4a, 4b).

9. Method for operating a camera-based exterior view assembly (2) for road vehicles, in particular for operating a camera-based exterior rear view assembly (2) mounted to a road vehicle (1), in particular a method according to claim 8, in particular for use in a camera-based exterior view assembly (2) for road vehicles according to any of claims 1 to 6 and/or for use in a road vehicle (1) according to claim 7, the method further comprising:
receiving first optical radiation from a first area (II, IV) of the surrounding area of the road vehicle (1) within a first field of view (6, 6a, 6b) via a first optical path (7, 7a, 7b) defined by an optical lens system (4, 4a, 4b) and an image capturing sensor arrangement (5, 5a, 5b) of an image capturing system (3, 3a, 3b);
receiving second optical radiation from a second area (V) of the surrounding area of the road vehicle (1) different from the first area (II, IV), within a second field of view (11) different from the first field of view (6, 6a, 6b) via a second optical path (12, 12a) different from the first optical path (7, 7a, 7b) and defined by a light deflection means (10, 10a, 10b), said optical lens system (4, 4a, 4b) and said image capturing sensor arrangement (5, 5a, 5b) of said image capturing system (3, 3a, 3b);
creating combined image data (ID1+ID2, ID1+ID2+ID3) by means of said image capturing sensor arrangement (5, 5a, 5b) of said image capturing system (3, 3a, 3b), said combined image data (ID1+ID2, ID1+ID2+ID3) comprising a first image data section (ID1, ID3) representing the received first optical radiation from said first area (II, IV) of the surrounding area of the road vehicle (1) and a second image data section (ID2) representing the received second optical radiation from said second area (V, VI) of the surrounding area of the road vehicle (1) and
displaying the combined image data (ID1+ID2, ID1+ID2+ID3) to a vehicle user by means of an image display arrangement (DA); or
creating image data (ID1, ID2, ID3) by means of said image capturing sensor arrangement (5, 5a, 5b) of said image capturing system (3, 3a, 3b), said image data (ID1, ID2, ID3) comprising first image data (ID1, ID3) representing the received first optical radiation from said first area (II, IV) of the surrounding area of the road vehicle (1) and a second image data (ID2) representing the received second optical radiation from said second area (V, VI) of the surrounding area of the road vehicle (1) and
displaying said image data (ID1, ID2, ID3) to a vehicle user by means of one image display arrangements (DA) or by means of a plurality of image display arrangements (DA).

10. Method according to any of the claims 8 or 9, wherein
- the first area (II, IV) of the surrounding area of the road vehicle (1) comprises a first class area (II, IV) or a first plurality of class areas (II, IV) as defined in UN ECE Regulation No 46; and
- the second area (V, VI) of the surrounding area of the road vehicle (1) comprises a second different class area (V, VI) or a second plurality of different class areas (V, VI) as defined in UN ECE Regulation No 46.

11. Method according to any of claims 8 to 10, further comprising:
- receiving first optical radiation from a first area (II, IV) of the surrounding area of the road vehicle (1) within a first field of view (6) or a plurality of first fields of view (6a, 6b) of an image capturing system (3) or of a plurality of image capturing systems (3a, 3b) adapted to collect optical radiation from a first class area (II, IV) or a first plurality of class areas (II, IV) of the surrounding area of the road vehicle (1) as defined in UN ECE Regulation No 46; and
- receiving second optical radiation from a second area (V) of the surrounding area of the road vehicle (1) different from the first area (II, IV) within a second field of view (11) of a light deflection device (10, 10a, 10b) adapted to collect optical radiation from a second different class area (V, VI) or a second plurality of different class areas (V, VI) of the surrounding area of the road vehicle (1) as defined in UN ECE Regulation No 46.

12. Method according to any of claims 8 to 11, further comprising:
- applying an image post processing and/or image correction algorithm to the combined image data (ID1+ID2, ID1+ID2+ID3) before displaying the combined image data (ID1+ID2, ID1+ID2+ID3) to a vehicle user by means of an image display arrangement (DA) to eliminate one of image distortion and/or differences in image quality and/or differences in image brightness and/or differences in image sharpness;
- in particular applying to the combined image data (ID1+ID2, ID1+ID2+ID3) an image post processing and/or image correction algorithm based on calibration data and/or applying to the combined image data an artificial intelligence based and/or neuronal network based image post processing and/or image correction algorithm comprising a machine learning model in the form of a pre-trained neural network, in particular in the form of a pre-trained transversal neural network and/or in the form of a pre-trained convolutional neural network.

13. Data structure for use in a camera-based exterior view assembly (2) for road vehicles, in particular for use in a camera-based exterior rear view assembly (2) mounted to a road vehicle (1) according to any of claims 1 to 6 and/or for use in a road vehicle (1) according to claim 7,
and/or a data structure generated by a camera-based exterior view assembly (2) for road vehicles, in particular generated by a camera-based exterior rear view assembly (2) mounted to a road vehicle (1) according to any of claims 1 to 6 and/or by a road vehicle (1) according to claim 7,
in particular generated by a method or in the course of a method according to any of claims 8 to 12,
such data structure comprising combined image data (ID1+ID2, ID1+ID2+ID3) containing
- first image data (ID1, ID3) representing optical radiation captured along a first optical path (7, 7a, 7b) from a first part (II, IV) of the surrounding area of a road vehicle (1) within a first field of view (6, 6a, 6b);
- second image data (ID2) representing optical radiation captured along a second optical path (12, 12a) different from the first optical path (7) from a second part (V, VI) of the surrounding area of a road vehicle (1) within a second field of view (11) different from the first field of view (6, 6a, 6b);
and in particular containing
- boundary data (BD, BD1, BD2) adapted to create a displayable optical boundary separating the first image data (ID1, ID3) from the second image data (ID2) when said combined image data (ID1+ID2, ID1+ID2+ID3) is displayed.

14. Data structure according to claim 13, wherein
- said first image data (ID1, ID3) representing optical radiation captured along a first optical path (7, 7a, 7b) from a first part (II, IV) of the surrounding area of a road vehicle (1) within a first field of view (6, 6a, 6b) represents optical information from a first class area (II, IV) or a first plurality of class areas (II, IV) of the surrounding area of the road vehicle (1) as defined in UN ECE Regulation No 46; and
- said second image data (ID2) representing optical radiation captured along a second optical path (12, 12a) different from the first optical path (7, 7a, 7b) from a second part (V, VI) of the surrounding area of a road vehicle (1) within a second field of view (11) different from the first field of view (6, 6a, 6b) represents optical information from a second class area (V, VI) or a second plurality of class areas (V, VI) of the surrounding area of the road vehicle (1) as defined in UN ECE Regulation No 46.

15. Data processing program product, adapted for implementing a method for operating a camera-based exterior view assembly (2) for road vehicles, in particular a method for operating a camera-based exterior rear view assembly (2) mounted to a road vehicle (1), comprising instructions which, when the program is executed by a data processing unit, cause the data processing unit to carry out program steps adapted to implement a method according to any of the claims 8 to 12,
in particular in an arrangement according to any of claims 1 to 7,
in particular using and/or generating a data structure according to any of claims 13 to 14.
